# EUROPEAN PATENT SPECIFICATION

(11) **EP 3 218 325 B1**
(45) Date of publication and mention of the grant of the patent: **02.09.2020**
(21) Application number: 15805621.8
(22) Date of filing: 03.11.2015
(51) Int. Cl.: C04B 35/645, B23H 1/00, B22F 3/105

(54) **METHOD FOR CONSOLIDATION OF POWDER MATERIALS**
VERFAHREN ZUR KONSOLIDIERUNG VON PULVERMATERIALIEN
PROCÉDÉ DE CONSOLIDATION DE MATIÈRES PULVÉRULENTES

(30) Priority: 03.11.2014 PL 40998314
(43) Date of publication of application: 20.09.2017
(73) Proprietor: GENICORE SPOLKA Z OGRANICZONA ODPOWIEDZIALNOSCIA, 01-919 Warszawa (PL)
(72) Inventor: ROSINSKI, Marcin, 03-140 Warszawa (PL)
(74) Representative: Bury, Marek
(86) International application number: PCT/IB2015/058486
(87) International publication number: WO 2016/071832

(56) References cited:
- WO-A1-2013/158929
- WO-A2-2010/070623
- WO-A2-2014/155352

## Description

The object of the invention is a method for electric sintering of broad group of nanocrystalline powder materials, submicron and micron, and in particular for producing composite materials with inclusions of particles, inter alia: diamond, cubic boron nitride, nanotubes, graphene, Al₂O₃, SiC, Si₃N₄, WC, Ta, ReB₂, Zr0₂, TiC, TiN, jointly or separately, in die of hard materials, such as inter alia: sintered carbides or materials having high thermal conductivity, such as tungsten, molybdenum, aluminium, copper, jointly or separately.

In conventional sintering thermal energy is provided by radiation and heat conduction, therefore the sintered material is heated from its surface towards its core. Such method of heating determines that the heating rate and efficiency is low. Additionally, long sintering causes grain growth in the consolidated material, and loss of its advantageous properties in consequence. It occurs particularly after reaching during consolidation the critical density, equal to approximately 90% of solid material. In result, it is difficult to obtain materials having density of above 90% and grain size below 100 nm. In nanocrystalline materials the increase of hardness with grain size decrease is observed. Materials having nanocrystalline structure usually are more plastic and more resistant to fracture than classic polycrystals, even in case of brittle materials.

In the state of the art there are known numerous methods of sintering of powders involving activating them by electric field. These methods allow to perform the sintering process in a very short time, a few to a dozen of minutes, limiting this way grain growth in the consolidated material. In the literature these methods are referred to as: Electro Discharge Compaction (EDC). In these methods, similarly as in conventional Hot Pressing (HIP), the sintering process is realised with uniaxial pressure. An important difference is that in EDC-type electric field-activated sintering methods, thermal energy is released directly in the whole volume of the sintered material. WO 2014155352 A2 discloses a method of consolidation of powder materials by means of a device wherein the voltage applied to the powder is 0.5-15 kV.

In the 60s of the last century there were introduced methods wherein pulsed current is used in the first period of powder heating for sintered powder activation. These methods allow to perform the sintering process in a very short time, a few to a dozen of minutes, limiting this way grain growth in consolidated material. There methods are known as Plasma Assisted Sintering (PAS), Spark Plasma Sintering (SPS), Field Assisted Sintering Technique (FAST), Electric Pulse Assisted Consolidation (EPA), Pulse Electro-Discharge Consolidation (PEDC).

In methods involving heating by means of pulsed current, similarly to conventional direct current sintering, the powder is heated by Joule heating during current flow through a die, usually composed of graphene, and the sintered powder. However, in methods using pulsed current, depending on solution, heating is realised by means of pulsed current only in the first compaction period, or in the first and the second sintering step, as is in the case of the SPS method.

Although heating of the die by current pulses is not different from direct current heating in conventional methods, the heating of powder is much more complicated. This is due to many possible current flow paths through the consolidated powder subjected to pressing. The current flow can occur: in result of arc discharges in pores between consolidated powder particles, tunnelling through oxide layer covering the surface of powder in the location of their contact or its electric breakdown.

To provide conditions favouring the occurrence of electric breakdown in regions between powder particles it is recommended to use pressing at a low pressure. Electric breakdown is a discharge in surrounding gaps between particles, revealing itself by presence of arcing. The occurrence of breakdown depends on gap size d and mean free path of gas *λ*. If the condition *d > λ* is satisfied, then breakdown through the gas can occur. This effect is illustrated by the Paschen curve, representing the breakdown voltage in function of product of gap size and pressure. This curve is not monotonic. For example, it has a minimum: breakdown voltage equal to 300 V for atmospheric pressure with gap size *d* ∼ 9µm.

An important phenomenon associated with arc discharges is material transport, in consequence of this mechanism the transport of charge along gaps occurs. This is effactuated by evaporation of the material surface. In this stage purification of the surface of oxides and impurities takes place. These are the key phenomena, deciding about the properties of the sintered material, determining inter alia the degree of compaction, e.g. expressed as percentage of theoretical value of the sinter and grain size, which has the decisive effect on hardness, fracture toughness, plasticity.

In the known SPS-type methods, like e.g. the one disclosed in U.S. Patent Application US 2010/0139840, the value of the applied voltage usually fits within the range of 5 to 10V. Meeting the conditions for occurrence of breakdown can be still ensured by reduction of the gap size *d.* It can be achieved by increasing the pressure of pressing to tens of MPa in the first stage of the sintering process. The voltage of a few volts often is a value lower than the value corresponding to the minimum of Paschen curve and will not cause a breakdown even if e.g. the distance between powder particles is decreased or the gas pressure is decreased. Additionally, it turns out that at high pressure of pressing the contact area becomes higher, which makes arcing more difficult. Therefore low-voltage pulsed sintering often turns out to be unreliable and provides a sinter having disadvantageous parameters.

There are also known methods for heating by pulsed current in high-voltage conditions. Therein the energy source is a capacitor or a capacitor battery having the operational voltage of a few to tens of thousands volts. The solutions of this type have been disclosed inter alia in US patent documents nos 4,929,415 and 5,084,088, where a solution involving a capacitor battery having total capacitance of 240 µF has been disclosed. In this solution the operational voltage within the range of 5 to 30 kV has been used. The impulse duration was within the range of 10 to 200 µs.

A serious disadvantage of such solutions is that switching voltages in excess of 1 kV is very problematic. Spark gap switches used for this purpose are often unreliable and are frequently subjected to malefunction. Furthermore, they do not provide a sufficiently high pulse repetition frequency. Solutions with transistor switches, like disclosed in the published international patent application WO2014155352, enable switching with high frequency - of the order of 100 Hz, and are adopted to short pulse durations, from tens to hundreds of µs, but their construction for so high voltage range is problematic. They are also susceptible to failure. Application of voltages significantly exceeding 1 kV in combination with flows of current exceeding 40 kA causes precipitated erosion of electrodes and the die. Furthermore, construction of high-current and high-voltage power supply units is very problematic.

A certain solution is to apply a transformer solution, such as disclosed in the published international patent application WO2010070623. However, using inductive components, such as a transformer, has a consequence of increase of duration of the current pulse, which stimulates the powder being sintered, and decrease of the maximal value of current intensity, and in consequence it results in less control of the consolidation process.

The object of the invention is to solve the problems stated above.

The method of consolidation of powder materials according to the invention is performed by means of a device provided with a gastight operating chamber, a press connected to a first and a second electrode. In the die between the electrodes there is located the powder being consolidated, wherein the press exerts pressure on the powder with the first and the second electrode. To the first and the second electrode there is connected a circuit comprising a power supply unit, such that the flow of current provided by the power supply unit is closed through the first and the second electrode, and the consolidated powder, wherein the consolidated powder is subjected to pressure while stimulation by current pulses. The voltage applied to the powder in pulse peak is within the range of 50 V to 900 V, and current pulse duration is shorter than 300 µs. Initially gas from the operating chamber is being vacuumed until gas pressure in the operating chamber is not higher than 10⁻⁵ Pa, then the powder consolidation is performed in at least two steps.

The first step is used to purify the powder. In this step a pressure of the press corresponding to pressure on the powder from the range of 2 MPa to 15 MPa is applied, while the values of pulse current, pulse duty cycle and repetition frequency are chosen so that the powder temperature was constantly within the range of 0.05 to 0.3 of the powder melting temperature. In this step, due to a relatively small pressure of the press, the voids between powder particles are large enough for frequent occurrence of arc discharges. With the temperature of the process kept relatively low, consolidation of large grains does not occur. The gas is constantly vacuumed and gas pressure is constantly measured. When after initial rise, the gas pressure again reaches a value not greater than 10⁻³ Pa the second step of the consolidation is started.

In the second step the proper consolidation takes place. In this step a pressure of the press corresponding to pressure on the powder from the range of 15 MPa to 200 MPa is applied. The values of pulse current, pulse duty cycle and repetition frequency are chosen so that the powder temperature was constantly within the range of 0.6 to 0.9 of the powder melting temperature. Because a powder if a very high purity, achieved by the purification in the first step, is subjected to sintering, the second step provides a sinter having small grain and high density. As, the second step is performed with simultaneous measuring the powder shrinkage and is terminated if during a predefined time the shrinkage is lower than a predetermined threshold value. No shrinkage during a certain time means that further consolidation does not provide any significant effects. The criterion of shrinkage measurement provides the reduction of consolidation time. Predefined time is within the range of 15 to 60 seconds and predetermined threshold value is lower or equal 10 µm.

Preferably the threshold value is chosen based on the course of shrinkage in the second step. Making this value relative enables a more precise selection of the stop criterion and in consequence an optimal compromise between the consolidation time and consolidated powder density.

Preferably, a power supply unit having the voltage within the range of 50 V to 150 V and pulse duration shorter than or equal to 300 µs is used. By using such short durations it is possible to obtain effective arc discharges, purifying the powder in the first step and consolidating in the second step, even for relatively low voltages.

Preferably, the method according to the invention includes the third step, wherein the consolidated powder is cooled, with gradually decreasing the current intensity and/or pulse duty cycle. This prevents fracturing of the consolidated material, which sometimes occurs for too quick cooling.

The inventor has observed that sintering, as a surface-controlled process, is highly dependent from the condition of the surface of the particles. The composition of nanocrystalline materials comprises in ca. 50% of volume - for a material with 5 nm grain - atoms with elevated energetic state, located within the region of grain boundaries, where no long-range order is observed, therefore the sintering process becomes dominated by the grain boundaries, not the grains. The condition of the surface of the particles affects not only the distinct properties of the particles and the course of the sintering process, but also the final mechanical properties.

The results reveal that the ultra-pure nanoparticles are sintered faster at lower temperatures. Neck growth occurs by surface diffusion, dislocation motion and grain rotation. The nanoparticle sintering processes in conditions of controlled amount of oxygen are different. A very small neck growth, or even lack of it, is observed then. Impurification with oxygen decreases the surface energy and inhibits the sintering process kinetics.

Accordingly, the two-step consolidation method according to the invention, wherein the first step is used to purify the particles, and the second step is the proper consolidation, enables to obtain sinters having unmodified parameters with an essential reduction of voltage, in comparison with classic high-voltage methods. This enables a simplification of the device and operation in a preferable range of voltages and currents providing a longer reliable operation of the device.

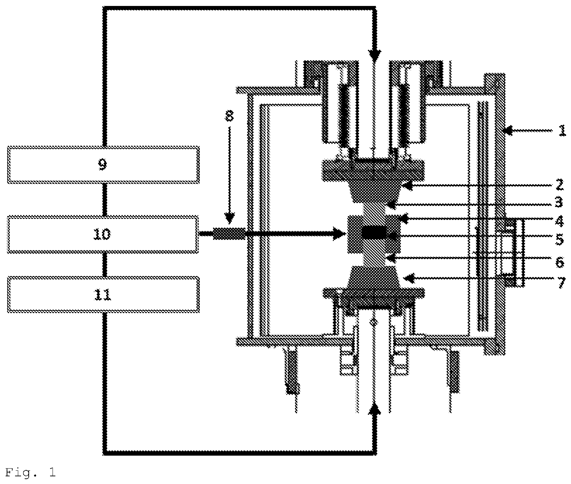

The object of the invention has been shown in embodiments in the drawing, wherein Fig. 1 shows the device adapted to execute a method according to the invention.

In the first embodiment the method of powder material consolidation is performed by means of a device presented schematically in Fig. 1. The device is provided with a vacuum operating chamber 1, wherein a graphene die 4 with the consolidated powder 5 is located. The device is provided with a press 11 with a hydraulic-electric drive, connected to a first electrode 3 and a second electrode 6. The electrodes cooperate with the die 4 located in the chamber, transferring the pressure of the press 11 to the consolidated powder 5 located in the die. To the first electrode 3 and the second electrode 6 there is connected a circuit comprising a power supply unit 9. The supply current 9 is closed through the electrodes the first 3 and the second 6, and the consolidated powder 5.

After locating the die 4 with the powder 5 in the vacuum operating chamber 1, the powder is subjected to pressure of the press, with simultaneous stimulation with current pulses. The current pulse peak voltage is within the range of 50 V to 999 V. With shortening the pulse duration, for a value of voltage from this range and pressure of 2 ÷ 15 MPa, it is possible to achieve an effect of electric breakdown between particles, revealing itself through an arc discharge, providing a high density and a low granularity of the resulting sinter. For the values of pressure of the press on the powder from this range and this range of voltage, the voids between the powder particles favour the occurrence of arcing.

Arc discharges in pores between the consolidated powder particles result in destruction of oxides and adsorbed gases on the surface of particles, cause locally a high temperature in the particle contact zone and result in decreasing the resultant resistance of the sample, and in consequence in the increase of current intensity flowing therethrough. Therefore, necks form between the particles of the consolidated powder, even if the average temperature of the sample is relatively low. However, locally, in the necks themselves, the temperature is much higher than in the inside of particles, because the electric current density flowing through the necks is much higher than inside particles. The necks grow and accordingly the powder consolidates. This process is much faster than it would be expected, because expansion of necks results in an increase of the current density and intensification of the process in the other pores between the consolidated powder particles, thus a positive feedback takes place.

The consolidation can be performed further, avoiding the necessity to apply a preliminary step of cold compaction, known from SPS-type techniques. In cold pressing irregular boundaries of particles favour the forming of agglomerates. Therefore, regrouping of particles is more difficult and lower output densities are obtained. Moreover, applying large pressures of pressing results in formation of high level of residual stress, affecting the formation of fractures during sintering cold-formed moulders. In further consolidation with the method according to the invention, in the second step the pressure of the press is increased. However, because the powder particles are purified, the reduction of voids between them in result of the pressure increment, restricts the occurrence of arcing much less than would be expected.

The operation of the method according to the invention has been observed in the following example. A nanocrystalline sinter of WC (40 nm) has been consolidated in a device in three steps of the method according to the invention.

In the first step a powder located in a graphene die has been heated, with the initial pressure in the vacuum chamber 2^{∗}10⁻³ Pa, pressure of the press within the range of 5 ÷ 15 MPa, to the temperature within the range of 0.05 ÷ 0.3 of melting temperature, which for WC equals to 2870ºC. The heating process has been performed until obtaining the value of the initial pressure in the operating chamber. After observing that measured value of pressure again equals to 2^{∗}10⁻³ Pa of the pressure of the press, the second step of consolidation has been started, with the pressure of the press 11 corresponding to pressure within the range of 15 ÷ 200 MPa, and temperature in the range of 0.6 ÷ 0.9 of melting temperature. The sintering process has been performed until the value of shrinkage of the consolidated system, measured with an extensometer having the resolution of ca. 10 pm, expressed by an absolute value, had been constant for 30 s. Here, the shrinkage is understood as a change in percent of dimension of a sample of powder 5 in accordance with the direction of pressing by the press 11. The cessation of shrinkage denotes no determination of such change during 30 s of the process.

After determination of shrinkage cessation the third step of consolidation has been performed, i.e. cooling the powder to ambient temperature with operating pressure in the vacuum chamber of 2^{∗}10⁻³ Pa and under the pressure of the press 11 corresponding to pressure within the range of 15 ÷ 200 MPa on the sample of powder 5. To reduce the residual stress level the cooling process has been performed with gradual reduction of the frequency of current pulses, so that to achieve a cooling rate from the range of 20 ÷ 250 ºC/min.

In result a WC sinter with hardness of 2900 HV1 has been obtained, with relative density of 99.8%. The average size of WC grain in the formed sinter was equal to 50 nm.

In the method according to the invention a range of voltage values unknown in the state of the art there is used. The range falls between the ranges of up to tens of V in SPS techniques, and the ranges of above 5 kV used in high-voltage techniques. Therefore it is possible to use power supply units having simpler constructions than those used in high-voltage techniques. In an example of a device in the power supply circuit there is used a pulse generating power supply unit 9 comprising **A** modules connected in serial or in parallel, or in serial-parallel configuration, providing the output pulse amplitude adjusted in the range of **B** VDC, pulse duration **C** µs, adjusted current limit from 0 to **D** A. The power supply unit is provided with the ability to generate pulse sequences having controlled lengths from 100 µs to 499 ms.
- the value of **A** is within the range of 1 to 19 modules,
- the value of **B** is within the range of 50 to 999 VDC,
- the value of **C** is within the range of 100 to 999 µs,
- the value of **D** is within the range of 1 to 99 A,
- the value of **E** is within the range of 0 to 99 A,
- the value of **F** is within the range of 100 to 999 µs,
- the value of **G** is within the range of 100 µs to 499 ms.

Construction of the power supply unit requires solving the problem of generation of pulses with minimal duration of lOOps and the amplitude up to 10kA with a controlled number of this pulses forming a "burst" and with controlled delay between these bursts. In extreme case this is a continuous current having a value of 10kA.

The power supply unit can comprise at least 5 pcs. of modules having the power of 20kW and load capacity of 2kA each, connected in parallel. Modular construction of the switching power supply enables its continuous operation, even in case of failure of one of its modules. The main circuit of the power supply unit is constructed with the following components: diode rectifier, chopper LC filter, transistor chopper, transistor inverter composed of four transistors in bridge configuration, transformer with the primary winding connected to the diagonal of the transistor inverter bridge, diode rectifier and an output LC filter.

The operation of a single 20 kA module: The supply voltage is rectified by the rectifier and smoothed in the chopper filter. The chopper adjusts the voltage supplied to the transistor inverter. The inverter operates with a constant transistor switching frequency of 100kHz. The value of the output current is adjusted by the value of the supply voltage of the inverter, and the current pulse width by the time of operation of the transistor inverter.

The operation of 100kW power supply unit comprising five modules connected in parallel: The output power of 100kW is obtained by a parallel combination of five modules. A master controller controls the total output current, and, depending on the desired current value, it activates a selected number of modules operating with a current limit and stabilizes this desired current value by "fine tuning" it by the current of one chosen module. Current outputs of all the modules are connected with common Cu rails. The power supply unit can operate with a smaller number of modules, limiting, accordingly to their number, the output power.

Thus, paradoxically, a solution having a lower efficiency and more complicated construction turned out to be preferable. Using a device according to the invention results in activation of fast sintering in solid phase below 0.75 of melting temperature. This is because it turned out that shortening the pulses results in arcing, due to effective removal of oxide layer and adsorbed gas layer. It also turned out that the pulse duration is long enough for the compaction process, but still too short for an extensive grain growth occurring in SPS-type techniques.

For a person skilled in the art, after the reading of this documentation it will be apparent, that the power supply unit in the device can be constructed in numerous different ways, including both solutions with an external switching circuit, and power supply units generating the desired pulses by themselves. It is also obvious that the first step and the second step can be supplemented with additional steps, or subject the consolidated powder to additional treatments between them. It is obvious that whether the step of cooling is necessary or not depends on composition of the consolidated powder, and that a person skilled in the art taught by this description that too rapid cooling can result in fractures is capable to plan a suitable course of this step, proper for a given powder composition and final conditions of the second step of the consolidation process.

## Claims

1. A method of consolidation of powder materials by means of a device provided with a gastight operating chamber (1), a press coupled (11) to a first electrode (3) and to a second electrode (6), wherein the consolidated powder (5) is located in a die (4), between the electrodes, wherein the press (11) exerts pressure on the powder (5) with the first electrode (3) and the second electrode (6), wherein a circuit comprising a power supply unit (9) is connected to the first electrode (3) and the second electrode (6), to close the flow of the current of the power supply unit (9) via the first electrode (3) the second electrode (6), and the consolidated powder (5), wherein the consolidated powder (5) is subjected to pressure simultaneously with excitation with current pulses,
**characterised in that**
the voltage applied to the powder (5) in pulse peak is within the range of 50 V to 900 V, and the pulse duration is shorter than 300 µs, and the consolidation of the powder (5) is performed in at least two steps, wherein,
gas from the operating chamber (1) is being vacuumed until gas pressure in the operating chamber (1) is not higher than 10⁻⁵ Pa, then
in the first step a pressure of the press (11) corresponding to pressure on the powder (5) within the range of 2 MPa to 15 MPa is applied, while the values of pulse current, pulse duty cycle and repetition frequency are chosen such that the temperature of the powder was constantly in the range of 0.05 to 0.3 of melting temperature of the powder, while gas is constantly vacuumed and gas pressure is constantly measured,
then when after initial rise, the gas pressure again reaches a value not greater than 10⁻³ Pa, in the second step a pressure of the press (11) corresponding to pressure on the powder (5) within the range of 15 MPa to 200 MPa is applied, and the values of pulse current, pulse duty cycle and repetition frequency are chosen such that the temperature of the powder (5) was constantly in the range of 0.6 to 0.9 of melting temperature of the powder (5), and
the second step is performed with simultaneous measurement of shrinkage of the powder, and it is terminated when during a predefined time the shrinkage is lower than a predetermined threshold value, wherein
predefined time is within the range of 15 to 60 seconds and predetermined threshold value is lower or equal 10 µm.

2. A method according to claim 1, **characterised in that** the predetermined threshold value is chosen based on the course of shrinkage in the second step.

3. A method according to any of claims 1 or 2, **characterised in that** pulses are repeated with frequency within the range of 1 to 5 kHz.

4. A method according to claim 2, **characterised in that** for applying a voltage applied to powder a power supply unit with a voltage within the range of 50 V to 150 V and pulse duration shorter than 300 µs is used.

5. A method according to any of claims 1 to 4, **characterised in that** it includes a third step, wherein the consolidated powder (5) is cooled by gradually decreasing the current intensity and/or the pulse duty cycle.

## Patentansprüche

1. Verfahren zur Verfestigung von Pulvermaterialien mittels einer Vorrichtung, die mit einer gasdichten Betriebskammer (1), einer Presse (11), die mit einer ersten Elektrode (3) und mit einer zweiten Elektrode (6) gekoppelt ist, vorgesehen ist, wobei sich das verfestigte Pulver (5) in einer Matrize (4) zwischen den Elektroden befindet, wobei die Presse (11) mit der ersten Elektrode (3) und der zweiten Elektrode (6) einen Druck auf das Pulver (5) ausübt, wobei eine Schaltung, die eine Energieversorgungseinheit (9) umfasst, mit der ersten Elektrode (3) und der zweiten Elektrode (6) verbunden ist, um den Fluss des Stroms der Energieversorgungseinheit (9) über die erste Elektrode (3), die zweite Elektrode (6) und das verfestigte Pulver (5) zu schließen, wobei das verfestigte Pulver (5) einem Druck ausgesetzt und gleichzeitig Stromimpulsen erregt wird,
**dadurch gekennzeichnet, dass**
die an das Pulver (5) angelegte Spannung in Impulsspitzen innerhalb des Bereichs von 50 V bis 900 V liegt und die Impulsdauer kürzer ist als 300 µs sowie die Verfestigung des Pulvers (5) in mindestens zwei Schritten durchgeführt wird, wobei
Gas aus der Betriebskammer (1) angesaugt wird, bis ein Gasdruck in der Betriebskammer (1) nicht höher ist als 10⁻⁵ Pa, wobei dann
in dem ersten Schritt ein Druck der Presse (11), der einem Druck auf dem Pulver (5) entspricht, innerhalb des Bereichs von 2 MPa bis 15 MPa aufgebracht wird, während die Werte eines Impulsstroms, eines Tastverhältnisses und einer Wiederholfrequenz derart gewählt werden, dass die Temperatur des Pulvers konstant in dem Bereich von 0,05 bis 0,3 einer Schmelztemperatur des Pulvers war, während Gas konstant angesaugt wird und Gasdruck konstant gemessen wird,
wobei dann nach einem anfänglichen Anstieg der Gasdruck wieder einen Wert erreicht, der nicht größer ist als 10⁻³ Pa, wobei in dem zweiten Schritt ein Druck der Presse (11), der einem Druck auf dem Pulver (5) entspricht, innerhalb des Bereichs von 15 MPa bis 200 MPa aufgebracht wird und die Werte eines Impulsstroms, eines Tastverhältnisses und einer Wiederholfrequenz derart gewählt werden, dass die Temperatur des Pulvers (5) konstant in dem Bereich von 0,6 bis 0,9 einer Schmelztemperatur des Pulvers (5) war, und
der zweite Schritt mit einer gleichzeitigen Messung einer Schrumpfung des Pulvers durchgeführt wird und er beendet wird, wenn die Schrumpfung während einer vordefinierten Zeit kleiner ist als ein vorbestimmter Schwellenwert, wobei eine vordefinierte Zeit innerhalb des Bereichs von 15 bis 60 Sekunden liegt und ein vorbestimmter Schwellenwert kleiner oder gleich 10 µm ist.

2. Verfahren nach Anspruch 1, **dadurch gekennzeichnet, dass** der vorbestimmte Schwellenwert basierend auf dem Verlauf einer Schrumpfung in dem zweiten Schritt gewählt wird.

3. Verfahren nach einem der Ansprüche 1 oder 2, **dadurch gekennzeichnet, dass** Impulse mit einer Frequenz innerhalb des Bereichs von 1 bis 5 kHz wiederholt werden.

4. Verfahren Anspruch 2, **dadurch gekennzeichnet, dass** zum Anlegen einer Spannung, die an ein Pulver angelegt wird, eine Energieversorgungseinheit mit einer Spannung innerhalb des Bereichs von 50 V bis 150 V und einer Impulsdauer, die kürzer ist als 300 µs, verwendet wird.

5. Verfahren nach einem der Ansprüche 1 bis 4, **dadurch gekennzeichnet, dass** es einen dritten Schritt umfasst, in dem das verfestigte Pulver (5) durch graduelles Verringern der Stromintensität und/oder des Tastverhältnisses gekühlt wird.

## Revendications

1. Procédé de consolidation de matières pulvérulentes au moyen d'un dispositif pourvu d'une chambre de travail étanche aux gaz (1), d'une presse (11) couplée à une première électrode (3) et à une deuxième électrode (6), dans lequel la poudre consolidée (5) est située dans une matrice (4), entre les électrodes, dans lequel la presse (11) exerce une pression sur la poudre (5) avec la première électrode (3) et la deuxième électrode (6), dans lequel un circuit comprenant un bloc d'alimentation (9) est connecté à la première électrode (3) et à la deuxième électrode (6), pour couper la circulation du courant du bloc d'alimentation (9) par l'intermédiaire de la première électrode (3), de la deuxième électrode (6) et de la poudre consolidée (5), dans lequel la poudre consolidée (5) est soumise à une pression en même temps qu'à une excitation avec des impulsions de courant,
**caractérisé en ce que**
la tension appliquée à la poudre (5) en crête d'impulsion se situe dans la plage de 50 V à 900 V, et la durée d'impulsion est inférieure à 300 µs, et la consolidation de la poudre (5) est effectuée en au moins deux étapes, dans lesquelles,
le gaz provenant de la chambre de travail (1) est aspiré jusqu'à ce que la pression de gaz dans la chambre de travail (1) ne soit pas supérieure à 10⁻⁵ Pa, puis
dans la première étape, une pression de la presse (11) correspondant à la pression sur la poudre (5) dans la plage de 2 MPa à 15 MPa est appliquée, tandis que les valeurs du courant d'impulsion, du rapport cyclique d'impulsion et de la fréquence de répétition sont choisies de sorte que la température de la poudre soit constamment dans la plage de 0,05 à 0,3 de la température de fusion de la poudre, tandis que le gaz est constamment aspiré et la pression de gaz est constamment mesurée,
ensuite, lorsqu'après augmentation initiale, la pression de gaz atteint à nouveau une valeur qui n'est pas supérieure à 10⁻³ Pa, dans la deuxième étape, une pression de la presse (11) correspondant à la pression sur la poudre (5) dans la plage de 15 MPa à 200 MPa est appliquée, et les valeurs du courant d'impulsion, du rapport cyclique d'impulsion et de la fréquence de répétition sont choisies de sorte que la température de la poudre (5) soit constamment dans la plage de 0,6 à 0,9 de la température de fusion de la poudre (5), et la deuxième étape est effectuée avec une mesure simultanée du retrait de la poudre, et elle est terminée lorsque, pendant un temps prédéfini, le retrait est inférieur à une valeur seuil prédéterminée, dans laquelle
le temps prédéfini se situe dans la plage de 15 à 60 secondes et la valeur seuil prédéterminée est inférieure ou égale à 10 µm.

2. Procédé selon la revendication 1, **caractérisé en ce que** la valeur seuil prédéterminée est choisie sur la base de l'évolution du retrait dans la deuxième étape.

3. Procédé selon l'une des revendications 1 ou 2, **caractérisé en ce que** des impulsions sont répétées avec une fréquence dans la plage de 1 à 5 kHz.

4. Procédé selon la revendication 2, **caractérisé en ce que**, pour appliquer une tension appliquée à la poudre, un bloc d'alimentation ayant une tension dans la plage de 50 V à 150 V et une durée d'impulsion plus courte que 300 µs est utilisé.

5. Procédé selon l'une des revendications 1 à 4, **caractérisé en ce qu'**il comporte une troisième étape, dans laquelle la poudre consolidée (5) est refroidie en diminuant progressivement l'intensité de courant et/ou le rapport cyclique d'impulsion.
